# EUROPEAN PATENT SPECIFICATION

(11) **EP 1 288 892 B1**
(45) Date of publication and mention of the grant of the patent: **21.09.2011**
(21) Application number: 01309763.9
(22) Date of filing: 20.11.2001
(51) Int. Cl.: G09G 3/20

(54) **Scaler chip and display apparatus**
Skalierungschip und Anzeigegerät
Circuit monopuce de mise à l'échelle et dispositif d'affichage

(30) Priority: 29.08.2001 KR 2001052455
(43) Date of publication of application: 05.03.2003
(73) Proprietor: SAMSUNG ELECTRONICS CO., LTD., Suwon-si, Gyeonggi-do 442-742 (KR)
(72) Inventor: Ko, Kyung-pill, Suwon-city, Kyungki-do (KR); Kim, Hyun-joon, Kwonseon-ku, Suwon city, Kyungki-do (KR)
(74) Representative: Walaski, Jan Filip

(56) References cited:
- EP-A- 1 164 569
- WO-A-01/29811
- WO-A-98/23094
- GB-A- 2 352 575
- US-A- 5 619 707
- US-A- 6 115 032
- "DIGITAL VISUAL INTERFACE DVI" DIGITAL VISUAL INTERFACE DVI, no. REVISION 10, 2 April 1999 (1999-04-02), pages 1-76, XP002907715

## Description

The present invention relates to a unified scaler chip for a display apparatus, the chip comprising a TMDS circuit for processing a digital video signal to produce horizontal and/or vertical synchronising signals and a scaler circuit and to a display apparatus having such a chip..

A computer system comprises a computer, which typically includes a hard disk drive, a main board containing a CPU, memory and support chips, a video card mounted to the main board and a power supply unit, and a display connected to the computer to receive video signals from the video card.

To minimize the electric power consumption of the computer system, the DPMS (Display Power Management System) method has been used for suspending operations of chips in connection with a video signal processing in the display apparatus when data has not being supplied from the video card for a predetermined period of time.

The DPMS method includes three modes according to the input of H (horizontal) and/or V (vertical) synchronising signals from the video card. These modes are a standby mode in which the H synchronising signal is not received, a suspend mode in which the V synchronising signal is not received and a complete power saving mode in which neither of the H and V synchronising signal are received.

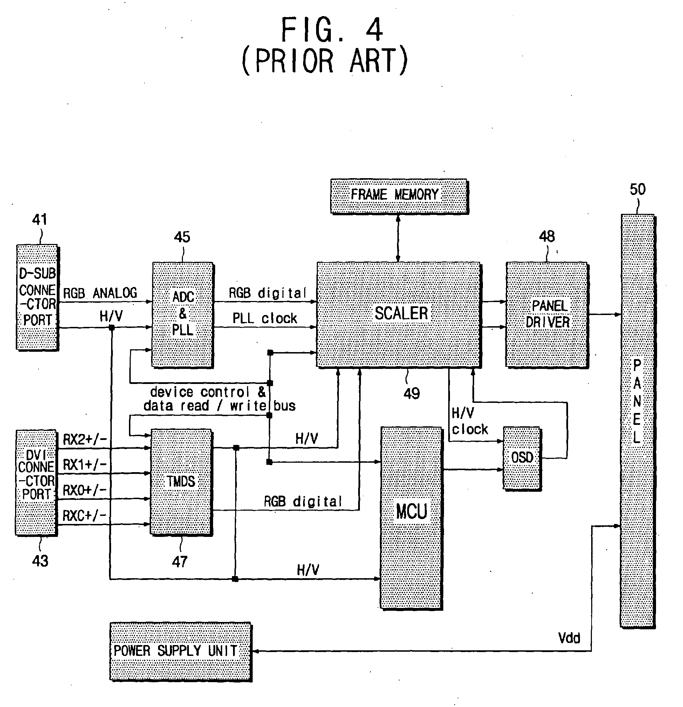

Figure 4 is a block diagram of a conventional display apparatus.

Referring to Figure 4, the display apparatus comprises a D-sub connector port 41 through which analogue RGB video signals and H/V synchronising signals are received from the video card of the computer, an A/D (analogue-to-digital) converter 45 for converting the analogue RGB video signals from the D-sub connector port 41 into digital signals, an LCD (Liquid Crystal Display) panel 50 and a panel driver 48 for driving the LCD panel 50. The display apparatus further comprises a DVI (Digital Video Interface) connector port 43 through which digital video signals are received, a TMDS (Transition Minimized Differential Signaling) part 47 for decoding the compressed digital video signals from the DVI connector port 43 into RGB video signals and H/V synchronising signals, and a scaler 49 for processing the synchronising signals and the digital RGB video signals received from the A/D converter 45 and the TMDS part 47 according to the size of the LCD panel 50 and outputting them to the panel driver 48.

Thus, in the conventional display apparatus, the three modes of the DPMS method are determined according to synchronising signals received from the D-sub connector port 41 and the TMDS part 47 in order to suspend operation of each component, so that electric power consumption can be minimized.

Recently, there has been developed a unified scaler chip having the functions of the A/D converter 45, the TMDS part 47, and the scaler 49 of the above-described display apparatus. However, in the conventional display apparatus having the unified scaler chip, the kinds of synchronising signal received is directly determined by the D-sub connector port 41 in the case of the input of analogue H/V synchronising signals but indirectly determined by the unified scaler chip in the case of the input of digital video signals. Thus, electric power must be always supplied to the unified scaler chip, thereby making it difficult to meet the DPMS standard.

EP 1164569 discloses a display unit having a unified scaler chip capable of outputting an analog video signal. WO01/29811 discloses a CRT monitor having a unified scaler chip which may receive digital video signals and output analog video signals. GB2352575 discloses an LCD monitor drive apparatus with an integrated circuit capable of receiving analog video signals and outputting digital video signals. US 6,115,032 discloses a display controller which converts analogCRT display signals to digital flat panel display signals. WO98/23094 discloses a video adapter circuit for adapting analog video signals designed to drive a CRT display monitor into signals appropriate for driving a flat panel display monitor. XP002907715 is the Digital Visual Interface (DVI) specification. US 5,619,707 discloses a video subsystem in which the pixel clock and memory clock may be deactivated to reduce the power consumed by the subsystem.

According to the present invention, there is provided a display apparatus as defined in claim 1, and a method of controlling a display apparatus as defined in claim 7.

An embodiment of the present invention will now be described, by way of example, with reference to Figures 1 to 3 of the accompanying drawings, in which:-
Figure 1 is a block diagram of a display apparatus according to the present invention;
Figure 2 is a flowchart illustrating a method according to the present invention in the case of the input of digital video signals;
Figure 3 is a flowchart illustrating a method according to the present invention in the case of the input of analogue video signals; and
Figure 4 is a control block diagram of a conventional display apparatus.

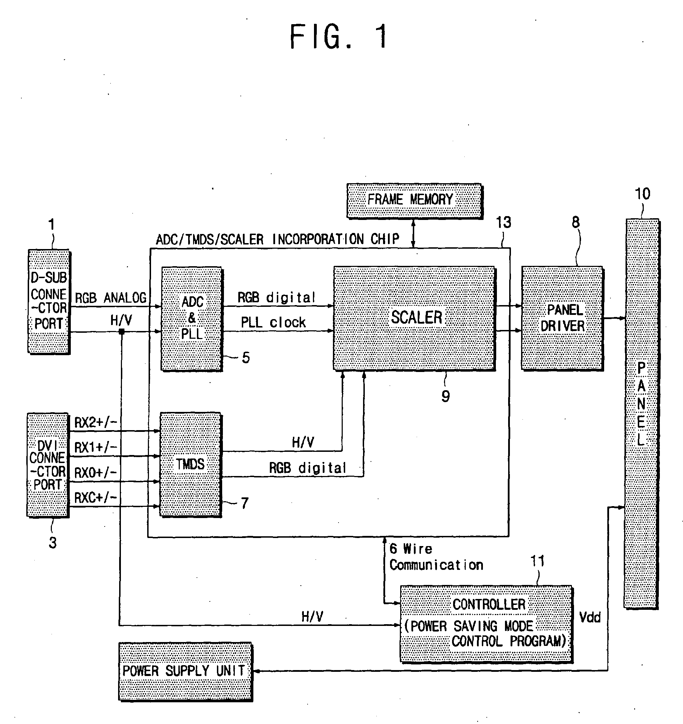

Referring to Figure 1, a display apparatus comprises a D-sub connector port 1 through which analogue RGB video signals and H/V synchronising signals can be received from a video card (not shown) of a computer, a DVI (Digital Video Interface) connector port 3 through which digital video signals can be received from a video card (not shown) of a computer, a panel driver 8 for driving an LCD panel 10, a unified scaler chip 13 for processing video signals received from the D-sub and DVI connector ports 1, 3, and a controller 11 arranged to receive the H/V synchronising signals from the D-sub connector port 1 or the unified scaler chip 13 and determining the resolution and dot clocks corresponding to frequencies of the received signals.

The unified scaler chip 13 includes a TMDS (Transition Minimized Differential Signaling) part 7 for decoding the compressed video signals into digital RGB video signals and H/V synchronising signals, an A/D converter 5 for converting the analogue RGB video signals from the D-sub connector port 1 into digital signals, and a scaler 9 for processing the synchronising signals and the digital RGB signals received from the A/D converter 5 and the TMDS part 7 according to the size of the LCD panel 10 and outputting them to the panel driver 8. That is, the unified scaler chip 13 receives the digital RGB video signals from the A/D converter 5 together with the digital RGB video signals and H/V synchronising signals from the TMDS part 7, and processes them. In the unified scaler chip 13, the A/D converter 5, the TMDS part 7, and the scaler 9 may be divided into separate blocks or may be formed into one circuit by manufacturers. The scaler chip 13 is provided with a plurality of communication pins for communication between the internal functional blocks and the controller 11. Thus, the controller 11 can detect, through the plurality of communication pins, whether the A/D converter 5 or TMDS part 7 is outputting digital RGB video signals and H/V synchronising signals.

The controller 11 has a power saving mode control program stored therein. The program controls the controller to determine that a power saving mode is required, in the case that at least one of the H/V synchronising signals is not output from the TMDS part 7 of the unified scaler chip 13, and to set a power saving flag in a memory (not shown) of the controller 11, and to lower the number of driving clocks of the unified scaler chip 13 according to the set up power saving flag.

The power saving mode control program of the controller 11 causes a control signal to be transmitted to the unified scaler chip 13 so as to switch on or off the A/D converter 5 and the TMDS part 7 of the unified scaler chip 13 according to whether power saving mode is required. Thus, the power saving mode control program periodically checks whether the H/V synchronising signals are being output by the TMDS part 7 of the unified scaler chip 13, and sets a register related to the driving clocks to a low value so as to reduce the driving clock frequency of the unified scaler chip 13 in the case that the TMDS part 7 does not output at least one of the H/V synchronising signals.

Further, the power saving mode control program periodically checks whether the H/V synchronising signals of an analogue video signal are being input through the D-sub connector port 1, and determines that the power saving mode is required in the case that at least one of the H/V synchronising signals is not received, and sets the power saving flag in the memory. Then, on the basis of the set power saving flag, the power saving mode control program turns off the unified scaler chip 13 and driving components so as to begin the power saving mode.

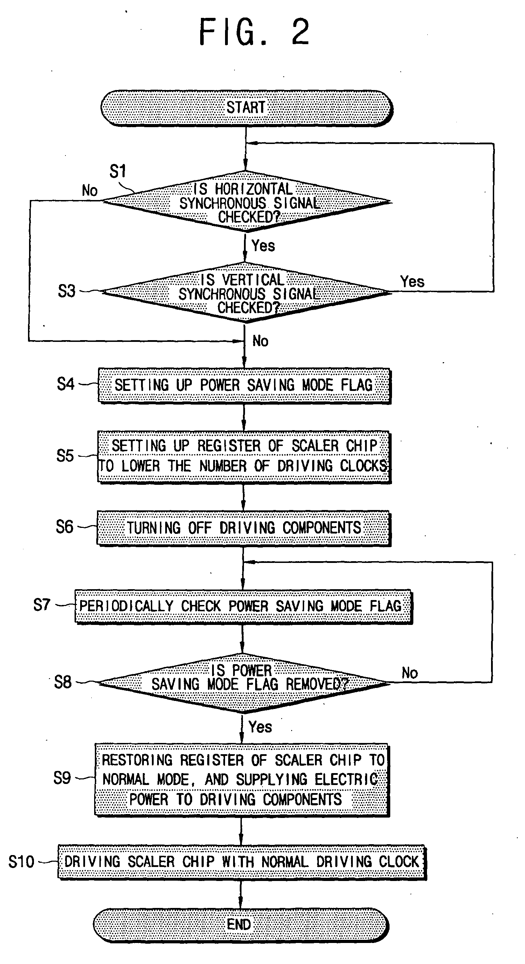

Referring to Figure 2, when a digital video signal is received from the video card, the power saving mode control program of the controller 11 periodically checks whether the H/V synchronising signals are being output by the TMDS part 7 through the communication pins of the unified scaler chip 13 (steps S1 and S3). When the TMDS part 7 outputs only the H synchronising signal, the power saving mode control program sets the power saving mode flag in the memory (step S4), sets up the register related to the driving clocks so as to lower the number of the driving clocks of the unified scaler chip 13 on the basis of the power saving mode flag (step S5), sets up the register related to the A/D converter 5 and the scaler 9 so as to suspend the operations of the A/D converter 5 and the scaler 9 and switches off the driving components such as the panel driver 8 (step S6). Thereafter, the power saving mode control program periodically checks the power saving mode flag which is set according to whether the H/V synchronising signals are outputted from the unified scaler chip 13 (step S7) and detects whether or not the power saving mode flag has been removed (step S8). When the power saving mode flag is removed, i.e. when the power saving mode is changed to normal power mode in which both the H and V synchronising signals are received, the power saving mode control program sets up the register related to the A/D converter 5 and the scaler 9 so as to restore the number of the driving clocks of the unified scaler chip 13, thereby supplying normal electric power to the driving components (S9). According as normal electric power is supplied, the unified scaler chip 13 is operated with the normal driving clock (S10).

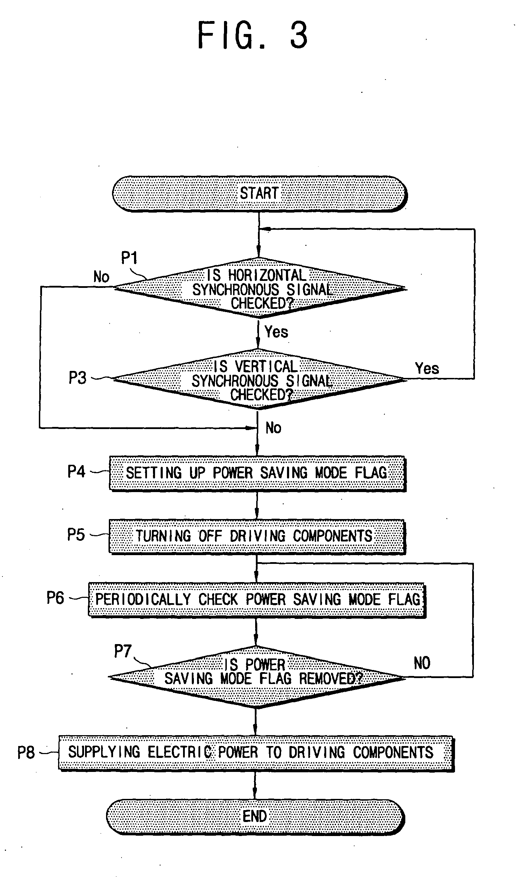

On the other hand, as shown in Figure 3, when an analogue video signal is received from the video card, the power saving mode control program of the controller 11 periodically checks whether or not the H/V synchronising signals are transmitted from the D-sub connector port 1 to the unified scaler chip 13 (steps P1 and P3). When only the H synchronising signal is received or neither of the H/V synchronising signals are received from a video card, the power saving mode control program sets the power saving mode flag in the memory (step P4), sets the register related to the unified scaler chip 13 so as to suspend the operation of the unified scaler chip 13 and switches off the driving components on the basis of the power saving mode flag (P5). Thereafter, the power saving mode control program periodically checks the power saving mode (step P6) and detects whether or not the power saving mode flag has been removed (step P7). Then, the power saving mode control program continues to periodically check the power saving mode flag in the case that the power saving mode flag has not been removed, and the power saving mode control program causes electric power to be supplied to the unified scaler chip 13 and the driving components when the power saving mode flag has been removed (step P8).

In the above description, the controller 11 determines that the power saving mode is required in the case that the V synchronising signal is not input into the scaler chip 13. However, it is possible to determine that the power saving mode is required in the case that only the V synchronising signal is inputted.

As described above, using the unified scaler chip having the TMDS part decoding the compressed digital video signals to output the H/V synchronising signals and the A/D converter digitizing the analogue video signals, the number of the driving clocks of the unified scaler chip is lowered at the power saving mode, thereby increasing a power saving efficiency and decreasing heat generated from the unified scaler chip.

As described above, the present invention provides a display apparatus and controlling method thereof, in which electric power consumption can be effectively minimized by controlling a unified scaler chip at a power saving mode.

## Claims

1. A display apparatus comprising an analog input interface and a digital input interface, one at a time receiving video signals from a video card, through which analog and digital video signals are respectively received from said video card and a plurality of driving components (8) for driving a display (10), further comprising:
a power supply unit for supplying electric power;
a unified scaler chip (13) including:
an analog-to-digital A/D converter (5) for receiving and processing an analog video signal to produce a first digital signal;
a transmission minimised differential signaling TMDS circuit (7) for receiving and processing a digital video signal to produce a second digital signal and horizontal and vertical synchronising signals of the digital video signal; and
a scaler (9) for receiving and processing the first and the second digital signals for display, **characterised by**:
a controller (11) for detecting the horizontal and vertical synchronising signals of the digital video signal processed by the TMDS circuit of the scaler chip,
the controller being arranged while receiving digital video signals from the video card to turn off the driving components (8), to turn off the A/D converter (5) and the scaler (9) and to lower the number of driving clocks of the scaler chip when at least one of the horizontal and vertical synchronising signals of the digital video signal is not output by the TMDS circuit.

2. The display apparatus according to claim 1, wherein the controller is further arranged to turn off operations of the A/D converter (5) and the scaler (9) when the at least one of the horizontal and vertical synchronising signals is not output.

3. The display apparatus according to claim 1 or 2, wherein the controller includes a memory, and is arranged to set up a power saving mode flag inside the memory when the at least one of the horizontal and vertical synchronising signal is not detected.

4. The display apparatus according to any one of the preceding claims, wherein the scaler chip includes a plurality of registers, and the controller is arranged to set up a register related to clock setting up among the registers so as to lower the number of the driving clocks of the scaler chip when the power saving mode flag is set up.

5. The display apparatus according to claim 4, wherein the controller is arranged to remove the power saving mode flag when both the horizontal and vertical synchronising signals are input, and to set up the register related to clock setting up so as to testore the number of driving clocks of the scaler chip.

6. The display apparatus according to claim 5, wherein the analog video signal input part is further arranged to receive horizontal and vertical synchronising signals for the analog video signal wherein the controller while receiving analog video signals from the video card is further arranged to turn off the operation of the scaler chip in the event that at least one of the horizontal and vertical synchronising signals of the analog video signal is not detected.

7. A method of controlling a display apparatus that comprises an analog input interface and a digital input interlace, one at a time deceiving video signals from a video card, through which analog and digital video signals are respectively received from said video card and a plurality of driving components (8) for driving a display (10), a power supply unit for supplying electric power, a unified scaler chip (13) including an analog-to-digital A/D converter (5) for receiving and processing an analog video signal to produce a first digital signal, a transmission minimised differential signalling TMDS circuit (7) for receiving and processing a digital video signal to produce a second digital signal and horizontal and vertical synchronising signals of the digital video signal and a scaler (9) for receiving and processing the first and the second digital signals for display, **characterised by**:
while receiving digital video signals from the video card detecting the horizontal and vertical synchronising signals of the digital video signal processed by the TMDS circuit of the scaler chip; and
in the event that at least one of the horizontal and vertical synchronising signals of the digital video signal is not output by the TDMS circuit (7), turning off the driving components (8), the Λ/D converter (5), and the scaler (9); and lowering the number of driving clocks of the scaler chip.

8. The method according to claim 7, further comprising the step of setting up a power saving mode flag when at least one of the horizontal and vertical synchronising signals is not detected.

9. The method according to claim 8, further comprising the step of periodically checking the scaler chip so as to remove the power saving mode flag when both the horizontal and vertical synchronising signals are detected, and to restore the number of driving clocks of the scaler chip.

10. The method according to claim 9, further comprising the step of while receiving analog video signals from the video card turning off the unified scaler chip and the driving components in the event that at least one of the horizontal and vertical synchronising signals of the analog video signal is not output.

## Patentansprüche

1. Anzeigegerät, das eine analoge Eingangsschnittstelle und eine digitale Eingangsschnittstelle umfasst, wobei eine nach der anderen Videosignale von einer Videokarte empfängt, durch die analoge und digitale Videosignale jeweilig von besagter Videokarte empfangen werden und eine Vielheit von Treiberkomponenten (8) zum Antreiben einer Anzeige (10) umfasst, weiter umfassend:
eine Stromversorgungseinheit zur Lieferung elektrischen Stroms;
einen vereinheitlichten Skalierungschip (13), der einschließt:
einen (A/D-)Analog-Digital-Umsetzer (5) zum Empfangen und Verarbeiten eines analogen Videosignals, um ein erstes digitales Signal zu erzeugen;
einen TMDS-Schaltkreis bzw. übertragungsminimierten differenziellen Signalisierschaltkreis (7) zum Empfangen und Verarbeiten eines digitalen Videosignals, um ein zweites digitales Signal und horizontale und vertikale Synchronisiersignale des digitalen Videosignals zu erzeugen; und
einen Scaler (9) zum Empfangen und Verarbeiten der ersten und der zweiten digitalen Signale zur Anzeige, **gekennzeichnet durch**:
einen Kontroller (11) zum Detektieren der horizontalen und vertikalen Synchronisiersignale des vom TMDS-Schaltkreis des Skalierungschips verarbeiteten digitalen Videosignals, wobei der Kontroller eingerichtet ist, während des Empfangs digitaler Videosignale von der Videokarte, die Treiberkomponenten (8) abzuschalten, den A/D-Umsetzer (5) und den Scaler (9) abzuschalten und die Anzahl von Treibertakten des Skalierungschips zu senken, wenn zumindest eins der horizontalen und vertikalen Synchronisiersignale des digitalen Videosignals nicht vom TMDS-Schaltkreis ausgegeben wird.

2. Anzeigegerät nach Anspruch 1, wobei der Kontroller weiter eingerichtet ist, Funktionen des A/D-Umsetzers (5) und des Scalers (9) abzuschalten, wenn das zumindest jeweils eine der horizontalen und vertikalen Synchronisiersignale nicht ausgegeben wird.

3. Anzeigegerät nach Anspruch 1 oder 2, wobei der Kontroller einen Speicher einschließt und eingerichtet ist, ein Stromsparmodus-Flag im Speicher zu anzulegen, wenn das zumindest jeweils eine des horizontalen und vertikalen Synchronisiersignals nicht detektiert wird.

4. Anzeigegerät nach einem beliebigen der vorhergehenden Ansprüche, wobei das Skalierungschip eine Vielheit von Registern einschließt und der Kontroller eingerichtet ist, ein Register zu anzulegen, das mit dem Takteinrichten unter den Registern verbunden ist, um die Anzahl der Treibertakte des Skalierungschips zu senken, wenn das Stromsparmodus-Flag angelegt ist.

5. Anzeigegerät nach Anspruch 4, wobei der Kontroller eingerichtet ist, das Stromsparmodus-Flag zu entfernen, wenn sowohl die horizontalen als auch die vertikalen Synchronisiersignale eingegeben werden und das mit dem Takteinrichten verbundene Register anzulegen, um die Anzahl der Treibertakte des Skalierungschips wieder herzustellen.

6. Anzeigegerät nach Anspruch 5, wobei der analoge Videosignaleingangsteil weiter eingerichtet ist, horizontale und vertikale Synchronisiersignale für das analoge Videosignal zu empfangen, wobei der Kontroller, während des Empfangs analoger Videosignale von der Videokarte, weiter eingerichtet ist, die Funktion des Skalierungschips abzuschalten im Falle, dass das zumindest eine der horizontalen und vertikalen Synchronisiersignale des analogen Videosignals nicht detektiert wird.

7. Verfahren zur Steuerung eines Anzeigegeräts, das eine analoge Eingangsschnittstelle und eine digitale Eingangsschnittstelle umfasst, wobei eine nach der anderen Videosignale von einer Videokarte empfängt, durch die analoge und digitale Videosignale jeweilig von besagter Videokarte empfangen werden und eine Vielheit von Treiberkomponenten (8) zum Antreiben einer Anzeige (10), eine Stromversorgungseinheit zur Lieferung elektrischen Stroms, einen vereinheitlichten Skalierungschip (13) einschließlich eines (A/D-) Analog-Digital-Umsetzers (5) zum Empfangen und Verarbeiten eines analogen Videosignals zum Erzeugen eines ersten digitalen Signals, einen TMDS-Schaltkreis bzw. übertragungsminimierten differenziellen Signalisierschaltkreis (7) zum Empfangen und Verarbeiten eines digitalen Videosignals zum Erzeugen eines zweiten digitalen Signals und horizontaler und vertikaler Synchronisiersignale des digitalen Videosignals und einen Scaler (9) zum Empfangen und Verarbeiten der ersten und zweiten digitalen Signale zur Anzeige umfasst, **gekennzeichnet durch**:
Detektieren, während des Empfangs digitaler Videosignale von der Videokarte, der horizontalen und vertikalen Synchronisiersignale des digitalen Videosignals, die vom TMDS-Schaltkreis des Skalierungschips verarbeitet wurden; und
im Falle, dass zumindest eins der horizontalen und vertikalen Synchronisiersignale des digitalen Videosignals nicht vom TMDS-Schaltkreis (7) ausgegeben wird, Abschalten der Treiberkomponenten (8), des A/D-Umsetzers (5) und des Scalers (9); und Senken der Anzahl von Treibertakten des Skalierungschips.

8. Verfahren nach Anspruch 7, das weiter den Schritt Anlegen eines Stromsparmodus-Flags umfasst, wenn zumindest eins der horizontalen und vertikalen Synchronisiersignale nicht detektiert wird.

9. Verfahren nach Anspruch 8, das weiter den Schritt der periodischen Überprüfung des Skalierungschips umfasst, um das Stromsparmodus-Flag zu entfernen, wenn sowohl die horizontalen als auch vertikalen Synchronisiersignale detektiert werden und um die Anzahl von Treibertakten des Skalierungschips wieder herzustellen.

10. Verfahren nach Anspruch 9, das weiter den Schritt, während Empfangen analoger Videosignale von der Videokarte, Abschalten des vereinheitlichten Skalierungschips und der Treiberkomponenten umfasst im Falle, dass zumindest eins der horizontalen und vertikalen Synchronisiersignale des analogen Videosignals nicht ausgegeben wird.

## Revendications

1. Appareil d'affichage comprenant une interface d'entrée analogique et un interface d'entrée numérique, recevant l'une après l'autre des signaux vidéo depuis une carte vidéo, par le biais desquelles des signaux vidéo analogiques et numériques sont respectivement reçus depuis ladite carte vidéo et une pluralité de composants d'excitation (8) pour exciter un afficheur (10), comprenant en outre :
une unité d'alimentation électrique pour fournir une puissance électrique ;
une puce de mise à l'échelle unifiée (13) comportant :
un convertisseur analogique/numérique A/N (5) pour recevoir et traiter un signal vidéo analogique afin de produire un premier signal numérique ;
un circuit TMDS (Transmission Minimised Differential Signalling) (7) pour recevoir et traiter un signal vidéo numérique afin de produire un second signal numérique et des signaux de synchronisation horizontale et verticale du signal vidéo numérique ; et
un circuit de mise à l'échelle (9) pour recevoir et traiter les premier et second signaux numériques en vue de leur affichage, **caractérisé par** :
une unité de commande (11) pour détecter les signaux de synchronisation horizontale et verticale du signal vidéo numérique traité par le circuit TMDS de la puce de mise à l'échelle,
l'unité de commande étant agencée, lors de la réception de signaux vidéo numériques depuis la carte vidéo, pour arrêter les composants d'excitation (8), arrêter le convertisseur A/N (5) et le circuit de mise à l'échelle (9) et réduire le nombre d'horloges d'excitation de la puce de mise à l'échelle quand au moins l'un des signaux de synchronisation horizontale et verticale du signal vidéo numérique n'est pas produit par le circuit TMDS.

2. Appareil d'affichage selon la revendication 1, dans lequel l'unité de commande est agencée en outre pour arrêter les opérations du convertisseur A/N (5) et du circuit de mise à l'échelle (9) quand l'au moins des signaux de synchronisation horizontale et verticale n'est pas produit en sortie.

3. Appareil d'affichage selon la revendication 1 ou 2, dans lequel l'unité de commande comporte une mémoire, et est agencée pour activer un fanion de mode d'économie d'énergie à l'intérieur de la mémoire quand l'au moins un des signaux de synchronisation horizontale et verticale n'est pas détecté.

4. Appareil d'affichage selon l'une quelconque des revendications précédentes, dans lequel la puce de mise à l'échelle comporte une pluralité de registres, et l'unité de commande est agencée pour activer un registre lié au réglage d'horloges parmi les registres de façon à réduire le nombre d'horloges d'excitation de la puce de mise à l'échelle quand le fanion de mode d'économie d'énergie est activé.

5. Appareil d'affichage selon la revendication 4, dans lequel l'unité de commande est agencée pour désactiver le fanion de mode d'économie d'énergie quand les deux signaux de synchronisation horizontale et verticale sont entrés, et régler le registre lié au réglage d'horloges de façon à restaurer le nombre d'horloges d'excitation de la puce de mise à l'échelle.

6. Appareil d'affichage selon la revendication 5, dans lequel la partie d'entrée de signal vidéo analogique est agencée en outre pour recevoir des signaux de synchronisation horizontale et verticale pour le signal vidéo analogique, dans lequel l'unité de commande durant la réception de signaux vidéo analogiques depuis la carte vidéo est agencée en outre pour arrêter l'opération de la puce de mise à l'échelle au cas où au moins l'un des signaux de synchronisation horizontale et verticale du signal vidéo analogique n'est pas détecté.

7. Procédé de commande d'un appareil d'affichage comprenant une interface d'entrée analogique et un interface d'entrée numérique, recevant l'une après l'autre des signaux vidéo depuis une carte vidéo, par le biais desquelles des signaux vidéo analogiques et numériques sont respectivement reçus depuis ladite carte vidéo et une pluralité de composants d'excitation (8) pour exciter un afficheur (10), une unité d'alimentation électrique pour fournir une puissance électrique, une puce de mise à l'échelle unifiée (13) comportant un convertisseur analogique/numérique A/N (5) pour recevoir et traiter un signal vidéo analogique afin de produire un premier signal numérique, un circuit TMDS (Transmission Minimised Differential Signalling) (7) pour recevoir et traiter un signal vidéo numérique afin de produire un second signal numérique et des signaux de synchronisation horizontale et verticale du signal vidéo numérique et un circuit de mise à l'échelle (9) pour recevoir et traiter les premier et second signaux numériques en vue de leur affichage, **caractérisé par** :
durant la réception de signaux vidéo numériques depuis la carte vidéo, la détection des signaux de synchronisation horizontale et verticale du signal vidéo numérique traité par le circuit TMDS de la puce de mise à l'échelle ; et
dans le cas où au moins l'un des signaux de synchronisation horizontale et verticale du signal vidéo numérique n'est pas produit par le circuit TMDS (7), l'arrêt des composants d'excitation (8), l'arrêt du convertisseur A/N (5) et du circuit de mise à l'échelle (9) ; et la réduction du nombre d'horloges d'excitation de la puce de mise à l'échelle.

8. Procédé selon la revendication 7, comprenant en outre l'étape d'activation d'un fanion de mode d'économie d'énergie quand au moins l'un des signaux de synchronisation horizontale et verticale n'est pas détecté.

9. Procédé selon la revendication 8, comprenant en outre l'étape de vérification périodique de la puce de mise à l'échelle de façon à désactiver le fanion de mode d'économie d'énergie quand les deux signaux de synchronisation horizontale et verticale sont détectés, et restaurer le nombre d'horloges de commande de la puce de mise à l'échelle.

10. Procédé selon la revendication 9, comprenant en outre à la réception de signaux vidéo analogiques depuis la carte vidéo l'étape d'arrêt de la puce de mise à l'échelle unifiée et des composants d'excitation au cas où au moins l'un des signaux de synchronisation horizontale et verticale du signal vidéo analogique n'est pas produit en sortie.
